# EUROPEAN PATENT SPECIFICATION

(11) **EP 3 264 394 B1**
(45) Date of publication and mention of the grant of the patent: **17.02.2021**
(21) Application number: 17178599.1
(22) Date of filing: 29.06.2017
(51) Int. Cl.: G09B 9/00

(54) **A METHOD AND A SYSTEM FOR MONITORING MILITARY TACTICS SIMULATIONS**
EIN VERFAHREN UND EIN SYSTEM ZUR ÜBERWACHUNG VON SIMULATIONEN VON MILITÄRISCHEN TAKTIKEN
UN PROCÉDÉ ET UN SYSTÈME DE SURVEILLANCE DE SIMULATIONS DE TACTIQUES MILITAIRES

(30) Priority: 30.06.2016 IT UA20164783
(43) Date of publication of application: 03.01.2018
(73) Proprietor: LACS S.r.l., 46100 Mantova (MN) (IT)
(72) Inventor: MIAN, Sergio, 31030 Borso Del Grappa (TV) (IT); LEPRE, Alessio, 31045 MottadiLivenza (IT)
(74) Representative: Trentin, Michele

(56) References cited:
- EP-A1- 2 804 152
- EP-A1- 3 035 161
- EP-A2- 2 066 128
- WO-A2-2007/099502
- WO-A2-2008/063614
- WO-A2-2013/176600
- US-A1- 2011 013 087
- US-A1- 2012 156 652
- US-A1- 2012 156 661
- US-A1- 2015 260 474
- US-A1- 2015 324 636
- US-A1- 2016 117 945
- US-B1- 8 358 345
- Anonymous: "Four Fundamentals of Marksmanship (ArmyStudyGuide.com)", , 30 March 2016 (2016-03-30), XP055622450, Retrieved from the Internet: URL:https://web.archive.org/web/2016033017 1701/https://www.armystudyguide.com/conten t/army_board_study_guide_topics/m16a2/four -fundamentals-of-mark.shtml [retrieved on 2019-09-16]

## Description

### Field of application

The present invention is applicable to the sector of tactical games or simulation of military events and its object is particularly focused on a monitoring system.

More in detail, this invention relates to a monitoring method of military tactical simulations.

### State of the Art

Both in the field of sporting activities and team games and in the professional field, military and police tactical simulations have been widely developed. Activities such as the lasertag or Laser game are included in the field, as well as softair, paintball and the like, as well as, of course, the training of special forces and the armed forces.

In all these situations, an important aspect is the monitoring of the development of the tactical simulation, both to determine the score of each participant, in the case it should be a recreational event or a game, and to determine the validity of the training, the mistakes that have been made and the participants' abilities in the military sector. Document US2016117945 discloses such a monitoring method.

In this sense, computer systems for managing and monitoring gaming events are known and able to gather information from all users. In particular, this information does not only concern the physical conditions, weapons and the position on the field of individual users, but also audio and video information, i.e. videos.

However, even if such IT systems allow detecting and storing such information, their post-analysis is complicated.

First, the above-mentioned computer systems do not allow to immediately identifying the important events that occurred during the tactical simulation, so that operators must perform a manual search.

Moreover, after identifying a significant event, operators must search for the same moment in each captured video so as to get a full overview of the simulation during the same event.

This post-analysis is, however, particularly important because often only by observing all the collected videos is possible to determine the real users' behaviour during the event, as well as their score or any mistake that might have been made.

In particular, such mistakes are not limited to the development of the action as such, but they are also referred to the proper use of the weapons by the users (in particular their grip), as well as verifying that the weapon and the user's gaze follow the same direction.

It does often happen that the user shoots in a different direction than the direction they are looking at, thus creating a dangerous situation for anyone around them.

Tactical simulation IT management systems are also known and they allow to save the time instants when predetermined events take place. However, the operator is disadvantageously obliged to search for such time instants in each captured video, so such system complicates the performing of a post-analysis of the tactical simulation and distracts the operator from the actual assessment. Those disadvantages associated with the identification of particular mistakes made by users, such as those described above, are also maintained.

### Presentation of the invention

Object of the present invention is to at least partially overcome the above-mentioned drawbacks by providing a monitoring for military tactical simulations that allow an easy post-analysis of the simulation itself.

In particular, an object of the present invention is to provide a monitoring method that facilitate the viewing of the various videos within the time intervals of predetermined events that are of interest.

Another object of the present invention is that the monitoring method allow to easily identify such predetermined events in the various videos.

A further object is that the method of the invention allow detecting pointing mistakes made by users or the unintentional hitting of targets.

Last but not least, one more objective wants the monitoring method of the invention to facilitate the analysis of the behaviours, even combined, of individual users during predetermined events.

Said objects, as well as others which will be better understood below, are achieved by a monitoring method for military tactical simulations according to claim 1

A method as defined in claim 1 advantageously allows to simultaneously watch all the synchronized videos so as to fully and easily evaluate the entire development of the tactical simulation. In particular, and even more advantageously, this allows to identify any group action mistakes that otherwise could not be identified and might have consequences in such a key area as the training of special forces or the like.

Moreover, advantageously, operators do not have to look for the desired time instants by watching each video because synchronization can be used.

This advantageously allows displaying a specific time instant from all recording devices at the same time, so as to allow to simultaneously analyse all the frames of the tactical simulation.

Moreover, advantageously, forward and rewind video synchronizations allow the operators not to perform such a task and allow them, at the same time, to analyse the correct simultaneous movement of all users in order to avoid even intermediate positioning mistakes during the simulated action, which could compromise their success.

The fact that all the frames of the same time instant can be displayed and all videos can be played simultaneously and synchronously allows the viewers to fully appreciate the evolution of the tactical simulation, thus correctly and easily assessing the behaviour of all users, their mistakes and facilitating the assessment and the whole post-analysis. Such an assessment, in particular, not only allows operators to point out the mistakes made by individuals, but also those mistakes based on the positioning and behaviour of other participating users. In other words, in a tactical simulation, behaviours can be assessed as correct as they are, but they may be wrong in view of the overall situation and the behaviours of other users.

According to the invention, this method also comprises the step of tracking the pointing direction of the weapon and the pointing direction of the user who manages the weapon to check if they coincide.

Therefore, advantageously, thanks to the method of the invention, and the synchronization of all videos, it is possible to exactly pinpoint the pointing directions of weapons and users in order to verify if any targets were randomly hit, and if the users may have committed any kind of mistake that might have posed a danger for the other users of the tactical simulation.

### Brief Description of the Drawings

Further features and advantages of the invention will be more evident considering a detailed description of the preferred, but not exclusive, embodiment of a method for monitoring military tactical simulations according to claim 1 illustrated by way of a non-limiting example with the aid of the accompanying drawings, wherein:
Figure 1 shows a system for monitoring military tactical simulations in a schematic view;
Figure 2 shows a detail of the system for monitoring military tactical simulations shown in figure 1.

### Detailed description of a few preferred embodiment examples

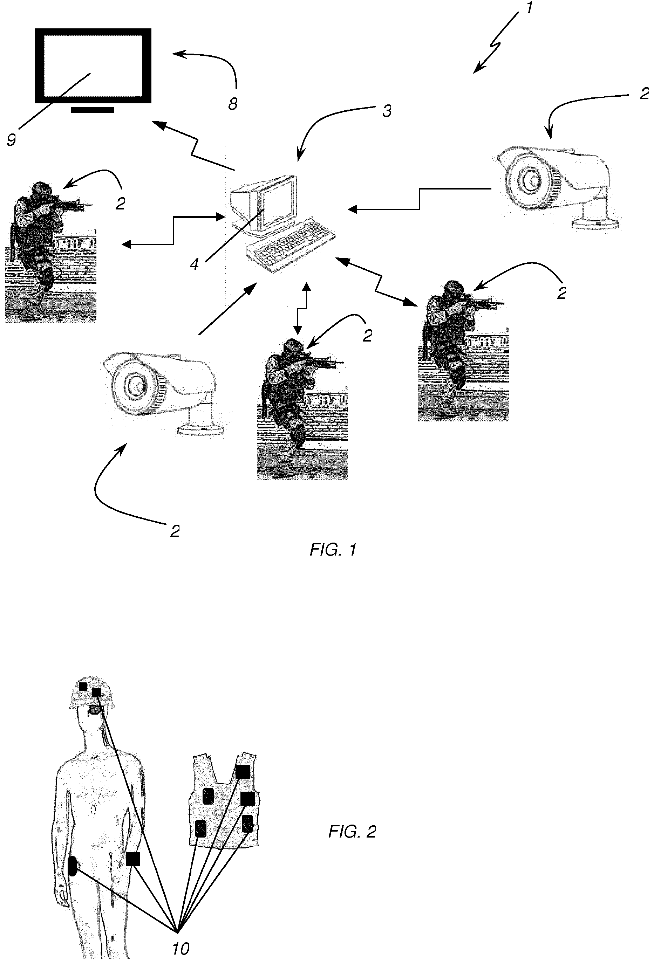

With reference to the mentioned figures, and in particular to Fig. 1, what is described is a system for monitoring **1** military tactical simulations suitable for implementing the method of the invention. It can be used indifferently both in the sports and recreational sectors and in the professional sector for the training of special forces and armed forces.

The monitoring system **1** specifically includes a number of video capture devices **2** located at various points in an area dedicated to military tactical simulations to record videos concerning the ongoing tactical simulations.

Such capture devices **2** typically include cameras, but such a detail ought not to be considered limiting for the various embodiments of the invention. The number of capture devices **2** is also a non-limiting feature of the invention, provided there are more than one.

The positioning of the capture devices **2** is another non-limiting feature of the invention. Such devices may, in fact, be positioned at fixed places in the simulation area or be given to each participating user or both methods might be used at the same time. Such a situation, as it has been said, is not a limitation for the invention; however, an higher number of capture devices **2** allow to simplify the analyses and post-analyses of the tactical simulation.

The monitoring system **1** also includes a control unit **3** connected to the capture devices **2** to receive the captured and stored videos. These videos might also be processed in the most appropriate ways, as it will be seen below.

The connection between the capture devices **2** and the control unit **3** is also a non-limiting feature of the invention. In particular, the connection can be a wired or wireless connection without this being a limit for the scope of the invention. According to a possible different embodiment, however, the capture devices have an internal memory to store videos that will be transmitted or manually copied into the control unit not live but only later.

Typically, the control unit **3** includes a computer **4** for processing and controlling the videos, and one or more mass memories for storing them.

A visualization device **8** for playing the videos is also included. In particular, the visualization device **8** consists of a monitor **9** and the screen is partitioned to allow the simultaneous viewing of all the videos. However, such aspects must not be considered as limiting for different embodiments of the invention wherein the visualization devices are many and possibly of different typologies. Each device, however, can be dedicated to viewing videos from a single capture device or partitioned for viewing the videos coming from different capture devices.

In each case, according to an aspect of the invention, the monitoring system 1 includes time synchronization means of the received videos so that they can be simultaneously analysed. In other words, the received videos are synchronized and kept synchronized even after storage, so that, advantageously, their simultaneous playing on visualization devices **8** allows the operators not only to watch them all, but also to watch the same time instants for each of them.

Still advantageously, the analysis and post-analysis activity is facilitated since the development of the tactical simulation can be watched in full.

Still advantageously, the effect is achieved without the operator acting on the individual videos to keep them aligned, in such a way the workload decreases and there's the certainty that the time instants under examination for each video match those of the other displayed videos.

According to the invention, however, the monitoring system **1** also includes synchronized playback, forward and rewind means for these videos. As it is clear, these latter allow to perform such operations on all videos in a synchronized and contemporary manner. It facilitates even more the post-analysis of the tactical simulation, since such synchronized playback, forward and rewind means allow the operators to simultaneously and effortlessly work on all videos by using just one control. This is not only a clear advantage for the operator (which does not have to work to "manually" create this synchronism), but also for the assessment of the development of the action and behaviour of all users on the field: those in charge of this aspect can totally concentrate on such aspects without wasting time and without losing one's focus.

This is a particularly advantageous aspect, which is also relevant to the analysis of a tactical simulation, both in an entertainment situation and, above all, in a professional one. What is important is that all users play fair not only as for what they need to do, but also as for how they act together with other users. At every single moment, each user must behave and act in order to achieve the best possible result in the action, protect themselves and the other users who act with them (the team) or third parties (in the case of a simulation for the Special forces, such other users are typically hostages or harmless civilians). Thus, the advantage of being able to assess each user's behaviour is of the essence, not only concerning the users themselves (this behaviour might be fair), but also the situation of the other users (there might be a kind of behaviour that appears to be fair if assessed by taking into consideration only the individual user, but it might actually be wrong if compared to the overall situation).

In other words, the monitoring system **1** of the invention allows to easily and automatically visualize the frames from all capture devices **2** at the same time instants, so as to be able to simultaneously analyse them, which will greatly benefit the analysis of the development of the tactical simulation.

As an additional advantage, video synchronization allows to edit an analysis video made of clips taken from the overall video at the most important time instants (i.e. the uninteresting time sequences are eliminated). The manual procedure would need to identify the same interesting time intervals for each video, the editing of each video by taking out the insignificant time intervals and the subsequent editing of videos by verifying that they are temporarily synchronized. Thanks to the monitoring system **1** of the invention, however, what needs to be done is identifying the interesting intervals and editing the video once since the operation is performed automatically on all videos as they are synchronized.

According to the invention both the synchronization means and the synchronized playback, forward and rewind means are constituted by special computer programmes running on the computer **4** of the control unit **3.** However, alternatively there could be special electronic devices dedicated to these two features.

According to the invention, the monitoring system **1** also includes, as it can be seen in detail in figure 2, a plurality of detectors **10** for detecting predetermined events.

Some examples of those include sensors worn by the users for detecting a hit on themselves, or sensors, which are again available to users, and are possibly coupled to the weapons supplied for detecting a shot that has been fired.

Such detectors **10**, whose number and type are not to be considered as limiting features of the invention, allow the monitoring system **1** to independently detect the occurrence of predetermined significant events of the tactical simulation such as shots, hits and more.

Therefore, it is advantageously possible to memorize the time instant of such events to determine fundamental points of analysis of tactical simulation. Alternatively, when such events occur each video is specially marked.

In any case, the operator taking care of the post-analysis may play the videos by visualizing the events one by one to focus their assessments only around the event themselves. Since videos are constantly synchronized, this operation is simple enough, since it does not have to be performed manually for each video, which does occur in the known art.

According to a further aspect of the invention, a particular embodiment of a detector is made of a marking device available to the operator or field users that can thus independently indicate relevant time instants to be later analysed.

According to the invention, the monitoring system also includes first means for identifying the pointing direction of the weapons available to the users participating to the tactical simulation. There are also second means for identifying the pointing direction of users involved in the tactical simulation.

Therefore, what is advantageously possible is determining whether the user points in the same direction as the weapon. This allows the operator to determine if a user shoots in safe conditions and if any hit is random or wanted.

According to the invention the identification means comprise IT products designed to identify and track the pointing direction in the videos.

Operatively, according to the method of the invention, during the development of the tactical simulation, each capture device **2** detects videos that are transmitted to the control unit **3** and here stored in addition to being displayed live on visualization devices **8.**

After acquiring, receiving and saving these videos, the operator performs their post-analysis to assess the behaviour of individual users and the proper development of the simulation.

In this sense, the control centre **3** starts playing back the videos by keeping them constantly and simultaneously synchronized with each other. In other words, there is a synchronization step of the videos to allow, as it has been said, the simulation analysis with all the above-mentioned advantages.

In this sense, and to perform a proper analysis, the operator repeatedly stops, rewinds, plays, or fast forwards the videos by using one individual command acting simultaneously on all videos that are still synchronized between them.

The frames of all capture devices are then simultaneously displayed (**2**), essentially at the same moment, so to be able to simultaneously analyse all the frames of the tactical simulation.

This advantageously allows to always have a full view of the development of the tactical simulation without obliging the operator to specifically work on each video. The assessment is simpler and the operator can stay focused on the simulation by assessing the users_{'}behaviour by watching all the videos at once.

In order to speed up the post-analysis, the operator may also switch from one relevant event to the other thanks to the use of detectors **10** that allowed the marking of the interesting time intervals. This step is also happening simultaneously for all videos thanks to the fact that they are kept synchronized between them.

Typically, the video synchronization operation is performed by analysing the videos by means of special portions of code with which the computer **4** of the control unit **3** is programmed.

As mentioned, there is also a tracking step of the pointing direction of the weapon and the pointing direction of the users, which makes it possible to understand if a user fired in unsafe conditions or if some hits were random.

Considering the foregoing, it is clear that the monitoring system of military tactical simulations of the invention overcomes the drawbacks of the prior art by allowing an easy post-analysis of the simulation.

In particular, the monitoring system makes it easier to watch various videos within the time interval of predetermined events of interest, as well as to detect such predetermined events in the various videos.

It also makes it easier to analyse the behaviours of individual users, even combined, in particular at such predetermined events.

The monitoring system of the invention can be widely modified and changed, and these changes all fall within the invention concept described in the appended claim.

Although the monitoring system of the invention has been described with particular reference to the accompanying figures, the reference numbers used in the description and in the claims, are used to improve the intelligence of the invention and do not constitute any limitation to the claimed scope of protection.

## Claims

1. Method for monitoring military tactical simulations performed by one or more users, each user having at least one weapon, said method comprising the following steps:
- receiving from two or more video capture devices (**2**), two or more videos related to a tactical simulation;
- saving said received videos;
- temporally synchronizing said videos;
- forwarding, rewinding, and playing said videos by keeping them synchronized between them, so that the frames showing a specific time instant and coming from all said capture devices (**2**) can be displayed essentially at the same time instant, so to be able to simultaneously analyse all said frames relating to said tactical simulation,
said method being **characterized in** comprising one tracking step of the pointing direction of the weapon, by checking first IT product means for identifying and tracking the pointing direction of the one or more weapons on all said temporally synchronized videos, and the pointing direction of the user who controls the weapon, by checking second IT product means for identifying and tracking the pointing direction of the users on all said temporally synchronized videos, to check if they coincide so as to allows an operator to determine if the user shoots in safe conditions and if any hit is random or wanted, said method comprising also a detection step of predetermined events, the predetermined events being a user being hit or a weapon being fired, and, after said detection step, a storage step of the time instant of said event so as to allow the visualization, by selecting said time instant, of the same frame from all said capture devices (2) at the time instant of said event and to perform said tracking step of the pointing direction of the weapon and the pointing direction of the user who controls the weapon.

## Patentansprüche

1. Verfahren zum Überwachen von militärtaktischen Simulationen, die von einem oder mehreren Benutzern durchgeführt werden, wobei jeder Benutzer zumindest eine Waffe hat, wobei das Verfahren die folgenden Schritte umfasst:
- Empfangen von zwei oder mehr Videos bezüglich einer taktischen Simulation von zwei oder mehr Videoaufnahmevorrichtungen (2);
- Speichern der empfangenen Videos;
- temporäres Synchronisieren der Videos;
- Vorspulen, Zurückspulen und Abspielen der Videos, indem zwischen ihnen synchronisiert wird, so dass die Einzelbilder, die einen spezifischen Zeitpunkt zeigen und von allen Aufnahmevorrichtungen (2) kommen, im Wesentlichen zum gleichen Zeitpunkt angezeigt werden können, um so in der Lage zu sein, alle Einzelbilder bezüglich der taktischen Simulation gleichzeitig zu analysieren,
wobei das Verfahren **gekennzeichnet ist durch** das Umfassen eines Verfolgungsschritts der Zeigerichtung der Waffe, indem ein erstes IT-Produkt zum Identifizieren und Verfolgen der Zeigerichtung der einen oder mehreren Waffen auf allen temporär synchronisierten Videos überprüft wird, und der Zeigerichtung des Benutzers, der die Waffe bedient, indem ein zweites IT-Produkt zum Identifizieren und Verfolgen der Zeigerichtung der Benutzer auf allen temporär synchronisierten Videos überprüft wird, um zu überprüfen, ob sie übereinstimmen, damit einem Bediener gestattet wird, zu bestimmen, ob der Benutzer in sicheren Bedingungen schießt und ob jeder Treffer zufällig oder gewollt ist, wobei das Verfahren auch einen Detektionsschritt vorbestimmter Ereignisse, wobei die vorbestimmten Ereignisse ein angeschossener Benutzer oder eine abgefeuerte Waffe ist, und nach dem Detektionsschritt einen Speicherungsschritt des Zeitpunkts des Ereignisses umfasst, um so durch Auswählen des Zeitpunkts die Visualisierung desselben Einzelbilds von allen Aufnahmevorrichtungen (2) zum Zeitpunkt des Ereignisses zu gestatten und den Verfolgungsschritt der Zeigerichtung der Waffe und der Zeigerichtung des Benutzers, der die Waffe bedient, durchzuführen.

## Revendications

1. Procédé pour surveiller des simulations de tactique militaire réalisées par un ou plusieurs utilisateurs, chaque utilisateur ayant au moins une arme, ledit procédé comprenant les étapes suivantes :
- la réception, en provenance d'au moins deux dispositifs de capture vidéo (**2**), d'au moins deux vidéos se rapportant à une simulation tactique ;
- la sauvegarde desdites vidéos reçues ;
- la synchronisation temporaire desdites vidéos ;
- la transmission, le rembobinage et la lecture desdites vidéos en les gardant synchronisées entre elles de telle sorte que les images montrant un instant spécifique et provenant de tous lesdits dispositifs de capture (**2**) puissent être affichées sensiblement au même instant de sorte à être capables d'analyser simultanément toutes lesdites images se rapportant à ladite simulation tactique,
ledit procédé étant **caractérisé en ce qu'**il comprend une étape de suivi de la direction de pointage de l'arme, en vérifiant des premiers moyens de produit IT pour identifier et suivre la direction de pointage d'une ou de plusieurs armes sur toutes lesdites vidéos temporairement synchronisés, et de la direction de pointage de l'utilisateur qui commande l'arme, en vérifiant des seconds moyens de produit IT pour identifier et suivre la direction de pointage des utilisateurs sur toutes lesdites vidéos temporairement synchronisés, pour vérifier si elles coïncident de sorte à permettre à un opérateur de déterminer si l'utilisateur tire dans des conditions sécurisées et si n'importe quel tir est aléatoire ou souhaité, ledit procédé comprenant également une étape de détection d'événements prédéterminés, les événements prédéterminés étant un utilisateur qui tire ou une arme qui est déchargée, et, après ladite étape de détection, une étape de stockage de l'instant dudit événement de sorte à permettre la visualisation, en sélectionnant ledit instant, de la même image provenant de tous lesdits dispositifs de capture (2) au même instant dudit événement et pour réaliser ladite étape de suivi de la direction de pointage de l'arme et de la direction de pointage de l'utilisateur qui commande l'arme.
